# EUROPEAN PATENT APPLICATION

(11) **EP 4 625 081 A1**
(43) Date of publication of application: **01.10.2025**
(21) Application number: 24167461.3
(22) Date of filing: 28.03.2024
(51) Int. Cl.: G05B 23/02

(54) **DETERMINING THE ROOT CAUSE OF FAULTS IN INDUSTRIAL PLANTS WITH GENERATIVE MACHINE LEARNING**

(71) Applicant: ABB SCHWEIZ AG, 5400 Baden (CH)
(72) Inventor: FECHNER, Tobias, 68165 Mannheim (DE); MANCA, Gianluca, 80935 München (DE); BUELOW, Fabian, 68526 Ladenburg (DE); TAN, Ruomu, 68163 Mannheim (DE)
(74) Representative: Maiwald GmbH

(57) **Abstract**

A computer-implemented method (100) for determining the root cause (6) of a fault (2) in an industrial plant (1), comprising the steps of:
• providing (110) a query (3) as to the root cause of a suspected fault (2) of the industrial plant or one of its assets, and/or of symptoms (2a) in which this suspected fault (2) manifests itself;
• processing (120) the query (3), said processing comprising determining, from the query (3), at least a type (2b) of the suspected fault (2), and the suspected location (2c) of this fault (2) in the industrial plant (1);
• providing (130), to a generative machine learning model, GMLM (4), at least:
∘ the query (3),
∘ the determined type (2b) and suspected location (2c) of the fault (2), and
∘ dynamic context information (5) about the industrial plant (1), said dynamic context (5) including at least state variables and/or measurement values captured in the industrial plant (1) and/or a control system thereof, thereby obtaining an output (4a) that is indicative of at least one candidate root cause (6*); and

• determining (160), from the output (4a) of the GMLM (4), the sought root cause (6).

## Description

### FIELD OF THE INVENTION

The invention relates to the troubleshooting of faults in industrial plants, and in particular to finding the root cause for a given problem.

### BACKGROUND

In industrial process plants, operators must assess complex chemical processes. Depending on the objectives, the target of process operation may vary, such as maintaining a high level of operational safety, product quality, sustainability or operational efficiency. Generally, the implemented process control system (PCS) can automatically handle certain deviations from the desired steady state of the process. In some instances, however, deviations in one part of the process may propagate to other parts without the PCS's ability to effectively manage it. In such abnormal situations, the operator is tasked with handling the situation and resolving its underlying root cause by means of corrective measures.

Here, the operator's assessment must be performed promptly and is based on multiple factors. That is, the operator must (i) understand the current process plant situation, (ii) collect information on the appropriate action to take, (iii) forecast the outcome and quantify the risk of the action prior to taking it, (iv) select a suitable corrective action and intervene accordingly with the process, (v) monitor the outcome of the conducted action, and (vi) potentially refine the assessment and conduct additional/alternative interventions.

The required information can be difficult to retrieve. It is displayed on multiple screens and may originate from multiple data sources and systems. It may also be difficult to comprehend based on e.g., (i) the amount of historical data that is available in an overwhelming quantity, (ii) a high number of alarms may flood the logs, (iii) terminology may impede a straightforward evaluation of the situation, and (iv) redundant information may cause a sensory overload. Therefore, the operator may be impeded in making decisive decisions. Additionally, operators require a great deal of experience to comprehend plant situations and to understand causal relationships. This requires extensive experience.

### OBJECTIVE OF THE INVENTION

It is therefore an objective of the invention to facilitate the determining of the root cause of faults in industrial plants.

This objective is achieved by a computer-implemented method according to the independent claim. Further advantageous embodiments are detailed in the respective dependent claims.

### DISCLOSURE OF THE INVENTION

The invention provides a computer-implemented method for determining the root cause of a fault in an industrial plant. A fault may be any deviation of the operating state of the industrial plant, and/or of at least one of the industrial assets that make up the industrial plant, from its intended normal operating state. In particular, a fault may relate to alarms being raised by individual assets, but also to superordinate alarms relating to the industrial plant as a whole, such as service alarms and process alarms. For example, service alarms may be raised in response to a service or an operation in the industrial plant being interrupted or being unable to start. Process alarms may be an indication that something is amiss, but they do not necessarily mean that the overall operation of the industrial plant is affected. If corrective action is taken soon after a process alarm is raised, operation of the plant may contain uninterrupted. But if a service alarm is raised, this means that some concrete action that is supposed to be performed according to the recipe of the process cannot be performed, which may bring the industrial process as a whole to a halt.

In the course of the method, a query as to the root cause of a suspected fault of the industrial plant or one of its assets, and/or of symptoms in which this suspected fault manifests itself, is provided. For example, the query may be generated by a process control system (such as a distributed control system, DCS) or alarm system of any kind, or by an operator who seeks assistance with a fault. For example, when the Apollo 13 mission turned sour, the query could have been, "I've just turned on the electric stirrers for the liquid oxygen tanks, and now we have had a bang and a MAIN B BUS UNDERVOLT alarm. What has happened? What shall we do?"

In the next step, the query is processed. This processing comprises determining, from the query, at least a type of the suspected fault, and the suspected location of this fault in the industrial plant. The type of the fault may, for example, indicate one or more classes out of a classification for faults in the plant. This classification may, in particular, depend on the structure of the industrial plant, and/or on the industrial process that is being executed on the industrial plant. For example, there may be process alarms, service alarms, and alarms that are clearly tied to malfunctions of individual industrial assets. In another example, faults may relate to something not working at all, something working but with a lower quality than expected, or something working but at a slower speed than expected. In another example, the type of the suspected fault may indicate whether the fault is related to an operational technology (OT) problem, an information technology (IT) problem, a hydraulic problem, a pneumatic problem, an electrical problem, or a mechanical problem. That is, the fault type may describe a class of symptoms of the fault, without already limiting the potential root cause. For example, a pneumatic problem may have a software crash in the central supply of compressed air as its root cause. The location may, for example, indicate a section or other sub-division of the plant to which the query relates. The processing of the query has the effect of narrowing down the possibilities for the root cause in a manner that the following investigation using a generative machine learning model, GMLM, has a higher chance of turning up a solution that points in the right direction.

The GMLM is given at least:
- the query,
- the determined type and suspected location of the fault, and
- dynamic context information about the industrial plant, wherein this dynamic context includes at least state variables and/or measurement values captured in the industrial plant and/or a control system thereof.

Based on this and optionally further input, the GMLM delivers an output that is indicative of at least one candidate root cause. From this output, the sought root cause is determined.

It was found that in this manner, the GMLM is enabled to perform causal reasoning as to probable root causes. The dynamic context information contains information about possible links between the observed fault or symptoms on the one hand, and the type and/or location of the fault on the other hand: At the beginning of the fault, there is the root cause, and later the fault manifests itself in terms of observable symptoms. In particular, root causes that are, based on the dynamic context information, completely unrelated to the fault and/or symptoms may be excluded. For example, if a particular phase of the industrial process makes use of only a subset of the industrial assets, and the dynamic context information indicates that all assets which are not used are in fact turned off as they should be, then these not-in-use assets can be ruled out as likely root causes.

The search space for causal chains leading from likely root causes to observed faults and/or symptoms is huge. In particular, such a causal chain usually comprises several elements, and the size of the search space increases exponentially with the number of elements. A popular saying goes, "For want of a nail, the horseshoe was lost, for want of a horseshoe, the horse was lost, for want of a horse, the rider was lost, for want of a rider, the battle was lost, for want of a battle, the kingdom was lost, and all for the want of a horseshoe nail". The causal reasoning that can exclude unlikely root causes very quickly allows to shrink this huge search space to a manageable size, so that the GMLM can concentrate on finding a root cause that is in fact likely without "dissipating" most of its attention in areas of the search space that are not relevant anyway.

For example, by means of considering the dynamic context information, a plethora of about 50 potential root causes may be reduced to 3 likely root causes that warrant further investigation.

The end result is that a most likely root cause of the given fault and/or symptoms may be determined in an automated manner, much quicker and much easier than this could be achieved by manual work. This in turn means that faults may be remedied quicker. The technical process of remedying a given fault and/or symptom starts at the moment of noticing this fault and/or symptom. It comprises both the tracking down of the root cause and the remedying of this root cause. If the tracking down of the root cause is speeded up, then the overall process of remedying the given fault and/or symptom benefits accordingly. The possibility to track down the root cause automatically also paves the way to the automated execution of remedies.

In a particularly advantageous embodiment, the determining of the sought root cause comprises:
- determining, from multiple candidate root causes of which one or more outputs of the GMLM are indicative, one most likely root cause as the sought root cause; and
- determining a reason why this root cause is deemed to be most likely.

This provides an easy way to plausibilize the finally determined sought root cause and guard against the tendency of GMLMs to "hallucinate", i.e., output something that seems reasonable at first sight but is factually incorrect. Such "hallucinations" may, for example, occur if neither the information used to train the GMLM nor the context information provided to it at the time of making the query contains the answer to the query. By examining the reason why a particular root cause is deemed to be most likely, "hallucinations" may be detected. For example, if the GMLM outputs, "I know that only this controller can be at fault because the color of its housing is ugly, the noise of its fan is driving me crazy, and the font type used on its front panel is just painful", then this reasoning has nothing to do with the technical functioning or malfunctioning of the controller, and the credibility of the finding that this controller is the root cause is low. By contrast, if the GMLM outputs, "The reported fault requires that both the water pump and the valve control fail at the same time. This can happen if a device to which both are attached is non-functional. Both devices are attached to controller XYZ. Therefore, failure of controller XYZ is the most likely root cause", there is more confidence that this controller is indeed the source of the problem. This is especially true if the reasoning can also be backed up with reference to the dynamic context information really showing that both devices are attached to controller XYZ.

Moreover, the selection of the most likely root cause may be broken down into multiple smaller items of work that may be handed to a GMLM. The probability that a GMLM will output a correct answer is much higher for smaller tasks than it is for more complex tasks. This probability decreases disproportionally with the size of the task. Therefore, if a complex task is broken down into smaller tasks, the better accuracy at performing each of these smaller tasks outweighs the effect of having multiple tasks instead of only one.

Therefore, in a further particularly advantageous embodiment, the multiple candidate root causes are provided to the GMLM to which the query was provided, and/or to another GMLM.

In a further particularly advantageous embodiment, determining of the sought root cause further comprises, and/or is preceded by:
- identifying at least one piece of information whose knowledge is indicative of which of the multiple candidate root causes is the most likely root cause; and
- obtaining this piece of information from an automated system or service, and/or from an operator of the plant.

In particular, if the context information is not yet sufficient for answering the query and determining the sought root cause, procuring more information and then acting based on this additional information is far better for the quality of the finally obtained result than trying to obtain the best result based on only the information that is already at hand. As the Apollo 13 flight director put it, "Let's work the problem people. Let's not make things worse by guessing." The procuring of additional information and identifying which information is needed next may, in particular, be performed in an iterative manner. This is in some way analogous to a diagnosis process in an electronic device where the service manual contains multiple test points for troubleshooting the circuit with a multimeter.

In one example, the experienced symptom may be that a certain computer system is no longer responsive. Likely causes for this are a failure of a fan that causes overheating on the one hand, and a failure of the magnetic hard drive on the other hand, because those are the main components that still contain moving parts. To discriminate between these two likely causes, an operator may be asked to hold his ear to the housing of the computer and listen whether there is a scratching sound that is being repeated a few times in quick succession, followed by further repetitions after a pause of a few seconds. This is the characteristic sound of the read head trying repeatedly to read a particular sector that is causing a read error. If this sound appears, then the hard drive is indeed in trouble.

In a similar manner, in a further particularly advantageous embodiment, the processing of the query may comprise:
- identifying at least one piece of information whose knowledge is indicative of the type and/or location of the fault; and
- obtaining this piece of information.

Again, the information may, for example, be obtained from an automated system or service, and/or from an operator of the plant. Also, the information may again be obtained in an iterative manner. Obtaining the information may involve arbitrary actions.

Potentially salient information may, for example, be identified based on a perceived lack of information in some aspect. For example, if it is suspected that plumbing between two points is at fault, and this plumbing is inside a wall, it may become necessary to pry open the wall.

Potentially salient information may also, for example, be identified based on an opportunity that it is available. In a non-industrial example, if a criminal investigator sees an even surface at a crime scene, such an even surface is deemed to be a potential carrier of fingerprints and routinely scanned for prints.

In a further particularly advantageous embodiment, the obtaining of at least one piece of information may comprise:
- determining a step-by-step sequence of actions for obtaining this piece of information; and
- causing this sequence of actions to be executed.

This step-by-step sequence may come from any suitable source. For example, such sequences may be stored in checklists that are triggered upon certain conditions and keywords, somewhat akin to checklists that are being used on airplanes to troubleshoot in-flight problems. Any pre-existing knowledge of this kind may be used. If such pre-existing knowledge is not available, the sequence of actions may again be procured from a GMLM. Obtaining such a sequence step by step is a task that may be very efficiently performed by a GMLM, just like, for example, generating text portion by portion.

In a further particularly advantageous embodiment, the type of fault comprises one or more of: a permanent fault, a sporadic fault, and a recurring fault. Distinguishing between these classes of faults allows to rule out many root causes as not likely because most root causes produce only faults of one of these types. For example, recurring faults are dependent on some condition that is fulfilled every now and then, so the root cause cannot be something that stays the same all the time. Likewise, if a fault is a permanent one, the root cause cannot be solely some condition that is fulfilled only intermittently. It therefore pays to invest some effort into determining the type of fault.

In a further particularly advantageous embodiment, static context information that is indicative at least of the structure and/or of the layout of the industrial plant, and/or of physical, chemical and/or biochemical information of educts from which an industrial processes executed on the industrial plant starts, is provided to the GMLM. This information conveys those characteristics of the industrial plant that are always present, not only if there is a fault. Additionally considering this static context information permits to further narrow down the space of possible root causes for the given fault and/or symptom. For example, if the static context information reveals that two devices failing at the same time are in fact connected to different redundant power supplies, then it is not likely that a simultaneous power failure of the two devices is the sought root cause.

In particular, the distinction between static context information and dynamic context information in combination with the distinction between a permanent fault, a sporadic fault, and a recurring fault may greatly narrow down the space of possible root causes. For example, if a fault is recurring or sporadic, a condition in the static context information (e.g., a link of some sort between multiple entities) may contribute to the occurring of the fault, but is most likely not the root cause for this fault.

Even if the fault is a permanent one, it is less likely that the root cause is to be found in some condition that is part of the static context. A static condition exists all the time, but the fault is not likely to have existed all the time. Rather, there will have been a time before the fault occurred. Therefore, the static condition may again be necessary, but not sufficient for the occurring of the fault.

In a non-industrial example, the symptom that is part of the query may be water leaking out of a wall in a living room. The static context information may indicate that the wall is connected to a ceiling that also forms the floor of the upper story, and in that floor, a pipe of the central heating is installed. This means that, if this pipe is carrying water, it has the opportunity, by means of the force of gravity, to propagate to the place in the living room wall where the leak was first detected. If the dynamic context information then indicates that the central heating pipe indeed carried water at some time before the leak appeared, the GMLM may then reason that the central heating pipe is indeed a possible root cause for the leaked water in the living room.

In particular, the static context information, and/or the dynamic context information, may comprise connectivity for material, information and/or energy between the fault, and/or its location, on the one hand, and at least one candidate root cause on the other hand. This facilitates a causal reasoning about which root causes are likely and which are not.

One example of connectivity for material is the providing of a medium emitted from a first entity in the plant to a second entity. For example, the medium may be a product produced by the first entity and supplied as an educt to the second entity. In another example, the drawing of a medium by two entities from one and the same source may be regarded as connectivity for this medium between the two entities as well. For example, if the one entity suddenly has a surge in demand for that medium, and the common source cannot provide this surge fast enough, the surge in demand of the one entity may cause a lack of the medium at the other entity.

One example of connectivity for energy is the transfer of heat between entities, be this intentional (e.g., due to a hot medium flowing from one entity to the other) or unintentional (e.g., due to waste heat radiating from one entity onto the other). Another example of connectivity for energy is the connection of two entities to a common source of energy, such as electricity or natural gas. Like with a common material source, a sudden demand for energy of one entity may impede the supply of energy to the other entity.

One example of connectivity for information is the connection of multiple entities to one and the same network. Such networks may cause the entities to work together in a useful manner, but they may also cause problems to spread from one entity to the other.

In another example of connectivity for information, a control loop controls a process variable, such as the pressure in a reactor. The variable that is manipulated by the control loop in order to change the pressure may then, for example, be a purge flow through a purge valve that is not directly connected to the reactor. The purge valve and the reactor then only have an indirect material connection, but they have a direct information connection.

In a further particularly advantageous embodiment, the dynamic context information further comprises a large information repository from which the GMLM is to extract information that is pertinent to the query. In this manner, the amount of information extracted from this large repository may be focused on information that is not only relevant to the industrial plant as such, but also to the concrete operating state to which the given fault and/or symptoms relate. An overly high amount of lesser relevant information emanating from the large information repository might crowd out smaller amounts of more relevant information in the process of determining likely root causes.

In a particularly advantageous embodiment, at least one GMLM is a foundation model. Examples of foundation models include large language models, LLM, or small language models, SLM, that are configured and pre-trained to take a text prompt as input and repeatedly predict portions of text. In this manner, the output of one round of the GMLM may be augmented with further information (such as static and/or dynamic context information) and re-used for the next round of the GMLM. But the GMLM may, for example, also be generative for other kinds of data, such as images. For example, the GMLM may predict an image that shows a floor plan or other layout of the industrial plant, with a possible root cause, or at least an area comprising this possible root cause, marked in any suitable manner. For example, the foundation model may be a large multimodal model that converts between modalities of data, takes multiple modalities of data as input, and/or produces multiple modalities of data as output. All foundation models have in common that they are trained on broad datasets, and can therefore be applied across a wide range of use cases. Typically, a foundation model comprises very many trainable parameters (e.g., on the order of billions), and the training requires massive amounts of training examples to avoid overfitting.

In another particularly advantageous embodiment, a verification plan comprising one or more actions is set up based at least in part on the static and/or dynamic context information, and one or both of the query and at least one candidate root cause. Of course, the verification may also relate to the finally determined root cause, rather than to a mere candidate root cause. Every finally determined root cause has been a candidate root cause before. That is, "at least one candidate root cause" is also to comprise the finally determined root cause.

Each action in the verification plan produces a confidence metric that is indicative of a propensity of the candidate root cause being plausible. The verification plan is then executed, so that one or more confidence metrics result. Based at least in part on these confidence metrics, a confidence rating is attributed to the finally determined root cause. In this manner, a tendency of the GMLM to "hallucinate", in particular if the information provided to it is qualitatively and/or quantitatively insufficient, may be lessened. A root cause that is determined as a result of "hallucination" is a bad thing because it delays the finding of the real root cause, and thus also the applying of any real remedy that removes the fault and/or symptoms. Also, futile remedial actions on wrong root causes result in unnecessary cost, e.g., for replacing equipment without a good cause, or prying open a wall or digging up the ground to access a pipe that is perfectly healthy. The outcome of the verification may be used as feedback for the method. In particular, this feedback may act on the composition of the query.

In particular, the verification plan may comprise at least a set of verification questions and expected answers. Executing the verification plan may then comprise at least providing verification questions to a GMLM that was used to determine the sought root cause, and/or to a different GMLM. The confidence metrics may then comprise at least a measure for an extent to which the so-obtained answers to the verification questions are in agreement with the expected answers. The reasoning behind this is, if the GMLM is hallucinating in the sense that it is giving out factual incorrect answers, it is very likely that, when being asked more questions on the topic, it will run into inconsistencies and contradictions. Even a deliberate attempt to erect a consistent building of lies regarding a particular topic is terribly difficult. For this reason, many criminals have already been caught and convicted using verification questions regarding what they just said.

In a further particularly advantageous embodiment, at least one action in the verification plan comprises evaluating to which extent:
- the GMLM should be able to determine a root cause given the static context information and/or dynamic context information, and/or
- the candidate root cause, and/or the finally determined root cause, is plausible given the static and/or dynamic context information.

In this manner, it may be tested whether the GMLM is able to understand the context information it is being provided, and whether the context actually contains information that leads to the determined root cause. If nothing in the context information points towards a particular root cause, then this particular root cause may not have been determined in the expected manner. For a root cause to be plausible, it should be clear from where it comes.

In a further particularly advantageous embodiment, based at least in part on the finally determined root cause, at least one remedial action that comprises changing the physical state and/or behavior of the industrial plant or at least one of its assets is determined. This remedial action is then executed on the industrial plant and/or the at least one asset. As discussed before, the method proposed here allows to determine the root cause quicker than a manual analysis and with a higher accuracy. Therefore, the remedy will be executed quicker, and the probability that this is on target and actually clears the fault and/or observed symptoms is increased. In particular, futile remedial actions that do not solve the observed problem are avoided.

Advantageous examples for remedial actions include:
- replacing and/or repairing at least one asset that is part of the finally determined root cause; and/or
- substituting a functionality, and/or a product, of at least one asset that is part of the most likely root cause; and/or
- moving the industrial plant, and/or at least one of its assets, into a state where it can better tolerate the presence of the most likely root cause.

In particularly, the latter two actions may allow the industrial process to continue despite the observed fault and/or symptoms, providing a quick fix until a repair or replacement may be executed as the permanent solution.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

The present disclosure addresses the issue of assisting human operators in monitoring and evaluating industrial processes to detect process faults based on an automated root cause analysis. The technical solution proposed in this invention is a framework for a software-based data-driven assistant model. The operator interacts with the assistant through a natural language-based human-machine interface. The operator can instruct the assistant to evaluate any given situation and justify its decisions. The model can also provide recommendations to the operator, along with justifications and potential hazards, upon request.

The present disclosure suggests a Framework for operator assistance in monitoring and evaluating industrial processes to detect process faults based on an automated root cause analysis. The operator is provided with a software-based assistant that implements a data-driven Generative Machine Learning Model (GMLM), such as a large language model (LLM) or other foundation model. This model is pretrained on a large scale of other data and use cases, then optionally tuned to the particular use case and process of interest or used out of the box. The operator and model interact through a natural language-based human-machine interface, such as a chat or predefined prompt patterns. The model has access to optional tools, data, and information sources that can be added or withdrawn depending on the particular use case. Such tools may include process simulators for evaluating alternative scenarios, algorithms for the data-driven causality estimation in abnormal situations to gain a better understanding of the causal relationships between physical properties in the process, or other data preprocessing tools and additional models, such as a classification model for identifying a situation or locating the most similar historical situation. The model may utilize historical data, such as process and alarm data, live data during runtime, process descriptions in the form of manuals, and best practices manuals for handling and resolving situations. The operator can instruct the assistant to evaluate any given situation and justify its decisions. The model can also provide recommendations to the operator, along with justifications and potential hazards, upon request.

The proposed solution of this disclosure seeks to address a key issue in fault detection at the current state-of-the-art: How can we integrate multiple data sources and data formats to enhance the current fault detection classification algorithms? Obviously, we can build separate time series (E.g., Autoencoders based) or alarm-based fault detection algorithms, but how do we create one approach that is based on multiple data sources which do not have a unified format and that are changing constantly?

A novel pipeline for fault detection is proposed as a solution to this problem. The main goal of the novel pipeline is to find the causal relationships between the observed faulty state (Which is described by the operator or the alarm system) and the original source of the disturbance that caused the observed state to occur and to provide a root cause analysis of process plant disturbances.

In the following, the invention is described using Figures without any intention to limit the scope of the invention. The Figures show:
Figure 1: Exemplary embodiment of the method 100 for determining the root cause 6 of a fault 2;
Figure 2: Exemplary realization of the method 100 with verification and use of external data sources.

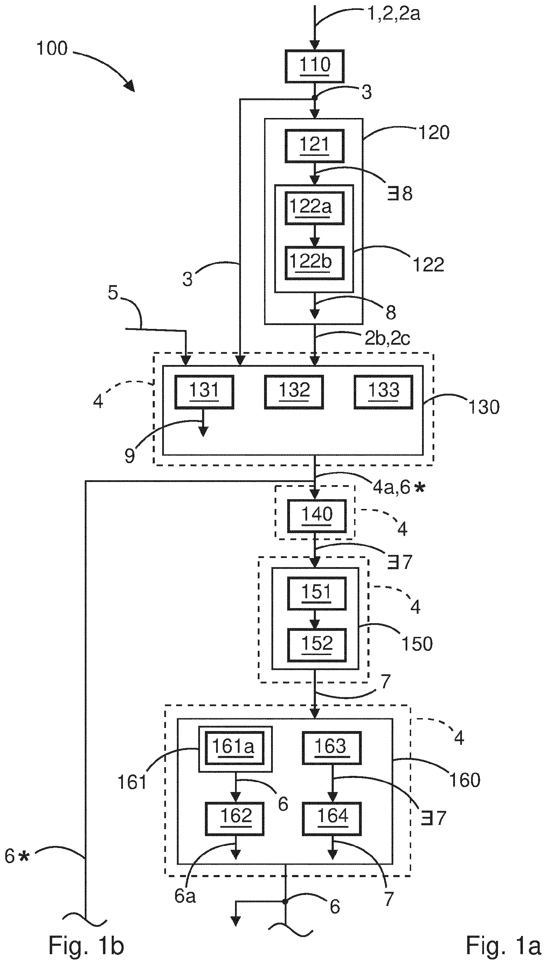

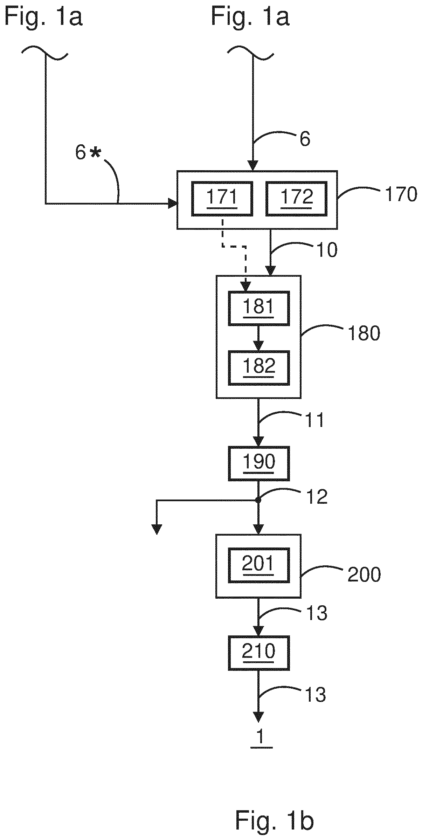

Figure 1 is a schematic flow chart of an exemplary embodiment of the method 100 for determining the root cause 6 of a fault 2 in an industrial plant 1.

In step 110, a query 3 as to the root cause of a suspected fault 2 of the industrial plant or one of its assets, and/or of symptoms 2a in which this suspected fault 2 manifests itself, is provided. That is, the method starts from a suspected fault 2, and/or symptoms 2a, which may be reported by any suitable source.

In step 120, the query 3 is processed. This processing comprises determining, from the query 3, at least a type 2b of the suspected fault 2, and the suspected location 2c of this fault 2 in the industrial plant 1.

According to block 121, at least one piece of information 8 whose knowledge is indicative of the type 2b and/or location 2c of the fault 2 may be identified. According to block 122, this piece of information 8 may then be obtained from any suitable source.

According to block 122a, a step-by-step sequence of actions for obtaining the piece of information 8 may be determined. According to block 122b, this sequence of actions may be executed.

In step 130, at least
- the query 3,
- the determined type 2b and suspected location 2c of the fault 2, and
- dynamic context information 5 about the industrial plant 1, said dynamic context 5 including at least state variables and/or measurement values captured in the industrial plant 1 and/or a control system thereof,
are provided to a generative machine learning model, GMLM 4. This produces an output 4a that is indicative of at least one candidate root cause 6*.

According to block 131, also static context information 9 that is indicative at least of the structure and/or of the layout of the industrial plant 1, and/or of physical, chemical and/or biochemical information of educts from which an industrial processes executed on the industrial plant 1 starts, may be provided to the GMLM 4.

According to block 132, the static context information 9, and/or the dynamic context information 5, may comprise connectivity for material, information and/or energy between the fault 2, and/or its location 2b, on the one hand, and at least one candidate root cause 6* on the other hand.

According to block 133, the dynamic context information 5 may further comprise a large information repository from which the GMLM 4 is to extract information that is pertinent to the query 3.

In the example shown in Figure 1, in step 140, at least one piece of information 7 whose knowledge is indicative of which of the multiple candidate root causes 6* is the most likely root cause may be identified. In step 150, this piece of information 7 may then be obtained from an automated system or service, and/or from an operator of the plant 1.

According to block 151, a step-by-step sequence of actions for obtaining the piece of information 7 may be determined. According to block 152, this sequence of actions may be executed.

In step 160, from the output 4a of the GMLM 4, the sought root cause 6 is determined.

According to block 161, one most likely root cause from multiple candidate root causes (6*) of which one or more outputs (4a) of the GMLM (4) are indicative may be determined as the sought root cause 6. According to block 162, a reason 6a why this root cause 6 is deemed to be most likely may then be determined as well.

In particular, according to block 161a, the multiple candidate root causes 6* may be provided to the GMLM 4 to which the query 3 was provided, and/or to another GMLM 4.

According to block 163, at least one piece of information 7 whose knowledge is indicative of which of the multiple candidate root causes 6* is the most likely root cause may be identified. According to block 164, this piece of information 7 may then be obtained from an automated system or service, and/or from an operator of the plant 1.

In the example shown in Figure 1, in step 170, based at least in part on the static and/or dynamic context information 5, and one or both of the query 3 and at least one candidate root cause 6*, a verification plan 10 is set up. This verification plan 10 comprises one or more actions. Executing each action produces a confidence metric 11 that is indicative of a propensity of the candidate root cause 6* or the finally determined root cause 6 being plausible.

According to block 171, the verification plan 10 may comprise at least a set of verification questions and expected answers.

According to block 172, at least one action in the verification plan 10 may comprise evaluating to which extent:
- the GMLM 4 should be able to determine a root cause 6 given the static context information 9 and/or dynamic context information 5, and/or
- the candidate root cause 6*, and/or the finally determined root cause 6, is plausible given the static context information 9 and/or dynamic context information 5.

In step 180, the verification plan 10 is executed. This results in one or more confidence metrics 11.

According to block 181, executing the verification plan 10 may comprises at least providing verification questions to the used GMLM 4, and/or to a different GMLM 4. According to block 182, the confidence metrics 11 may then comprise at least a measure for an extent to which the so-obtained answers to the verification questions are in agreement with the expected answers.

In step 190, based at least in part on the confidence metrics 11, a confidence rating 12 is attributed to the candidate root cause 6*, and/or to the finally determined root cause 6.

In the example shown in Figure 1, in step 200, based at least in part on the finally determined root cause 6, at least one remedial action 13 that comprises changing the physical state and/or behavior of the industrial plant 1 or at least one of its assets is determined.

According to block 201, the remedial action 13 may comprise one or more of:
- replacing and/or repairing at least one asset that is part of the finally determined root cause 6; and/or
- substituting a functionality, and/or a product, of at least one asset that is part of the finally determined root cause 6; and/or
- moving the industrial plant 1, and/or at least one of its assets, into a state where it can better tolerate the presence of the finally determined root cause 6.

In step 210, the at least one remedial action 13 is executed on the industrial plant 1, and/or on the at least one asset.

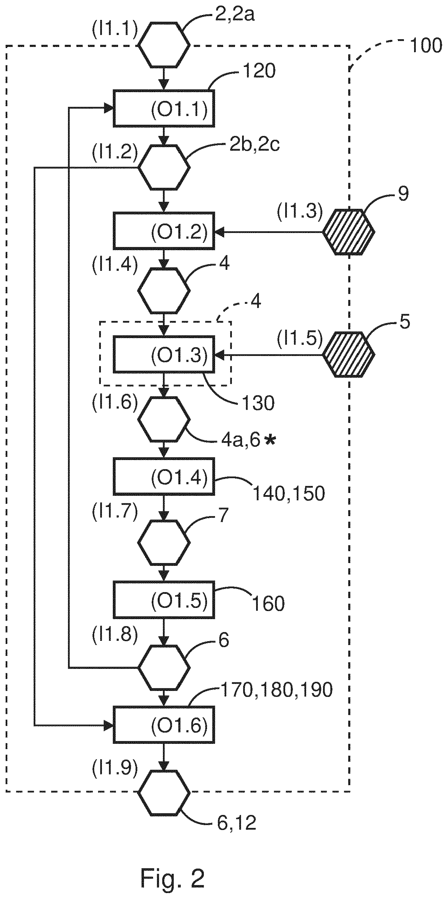

Figure 2 shows another exemplary realization of the method 100 with verification and use of external data sources.

The novel framework comprises the use of a trained or fine-tuned GMLM 4 and the integration of external data sources and systems. The framework is triggered by a text-based operator problem description (E.g., safety related operator questions) or by an automated alarm systems trigger (E.g., system warning) displayed as (11.1). For example, this may comprise the fault 2 and/or noticed symptoms 2a of the fault 2. In the first step (O1.1) the GMLM 4 extracts the intention of the input and preprocesses the initial request. This information is provided in the final prompt to guide the desired outcome. This corresponds to step 120 of the method 100. The preprocessed problem description (1.2) includes the type 2b, and/or the location 2c, of the fault 2.

To create a framework that can understand the root cause of the process fault, multiple domain specific data sources need to be interpreted and combined. In this ID we introduce the concept of static context data (11.3) and dynamic external data (11.5). The data sources and formats of static and dynamic data are similar but will be used differently in the process. Static data is defined as data that does not change during the process (E.g., Process plant structure, chemical and biochemical information). On the other hand, dynamic external data is mainly operational data that changes over time (E.g., time series data) or that has huge quantities (E.g., fact sheets, research papers or textbooks). By integrating these external static and dynamic information sources into the framework, the GMLM 4 will be able to understand the process faults more accurately and will be able to provide the operator with recommendations to optimize the current process plant state.

After defining the static context data and dynamic external data in the background, the GMLM can be initialized and provided with the static information sources. The static context setup (O1.2) involves three major steps. (i) Pre-prompting, within the format and style, involves providing a preliminary framework to guide the arguing technique (E.g., ReAct) and causal information (E.g., text based causal information, causal graphs) and (ii) preferred presentation of the result. It is particularly powerful when tailored to the audience's knowledge level, such as simplifying information for new employees (E.g., like explaining to a 5-year-old). This customization enhances comprehension and engagement, making problem-solving more efficient and tailored to the domain. (iii) Pre-prompting with context information (11.3) is crucial for a GMLM 4 as it establishes a knowledge foundation that helps the model understand and respond accurately. This context ensures coherent, fact-based, and contextually relevant responses.

The context information (I1.3) may comprise static context information 9. The dynamic external data (I1.5) may comprise dynamic context information 5.

In section O1.3 the dynamic information retrieval-based multiple information retrieval tools are added to the GMLM. This approach enables the model to query the right information in order to solve the question stated in the beginning. The retrieval methods are split up based on the underlying data sources and types E.g., Distributed Control System with operator or recipe actions like set-point changes and operation modes, Alarm management databases, time series databases or text and document databases. These retrieval methods with additional filtering methods are used to preprocess the data to make it easily understandable for the GMLM. This method not only facilitates semantic understanding but also allows for the incorporation of automated processes to retrieve the right data. Data processing and indexing plays a crucial role in querying the right data in this step to retire the right data in the right preprocessed form, because otherwise the GMLM will not understand the input data. This involves adding indexing methods (E.g., based on vector databases, graph databases or document databases), the right matching algorithms (E.g., time series based univariate and multivariate matching algorithms or text based embedding algorithms) and filtering algorithms (E.g., window-based) to minimize the false positive information retrieved. These preprocessing pipelines can also be performed by GMLM in the future.

The dynamic information retrieval O1.3 may correspond to, or comprise, step 130 of the method 100. The output 4a of the GMLM 4 may then be indicative of at least one candidate root cause 6*.

In addition to the preprocessed databases and data sources, we envision including external tools that can create on demand information that are too data or compute intensive to integrate seamlessly in the static or dynamic data sources (O1.4). These tools can be executed after a request is initiated. The first group of external tools are math-based tools that can add mathematical understanding to the data (E.g., calculator, statistics, causality, linear correlation tools). The second group of tools includes clustering-based tools to compare the current period with previous periods and to create a similarity score that can help to understand the current period in more detail by understanding the most similar previous period or batch in more detail (E.g., k-means clustering). The third group is based on simulation tools. These digital twins can then be used to try out different initial conditions and their outcomes that might lead to a certain alarm (Addition to root cause analysis). The other option to use the simulation based too is to try out certain actions in the process plant to solve the current sub-optimal state.

The integration (O1.4) of static and dynamic data sources corresponds to steps 140 and 150 of the method 100 and yields additional information 7 whose knowledge is indicative of which of the multiple candidate root causes 6* is the most likely root cause.

In the penultimate stage of constructing the framework, a critical step is the answer extraction (O1.5). This crucial process involves the natural language inference engine (E.g., based on Operator actions, causal graphs, warnings and problem descriptions) and the fault detection with root cause detection (Based on reasoning framework e.g., chain of reasoning). This step is crucial, because the answer performs the root cause analysis. This stage corresponds to step 160 of the method 100 and produces the sought root cause 6.

The last part is the validation engine (O1.6) which serves as a crucial last component. It thoroughly assesses the framework's performance and outputs, ensuring they meet established quality standards and function accurately. If the validation engine detects a problem (E.g., based on classification metrics, output parsing, clarity) or the operator interacts with the system (E.g., Provides additional information, reframing the problem or requesting more information) the framework can revert back to the question processing phase (O1.1) to change the problem setting and reiterate on the fault detection with different settings for the dynamic information retrieval or external tool setup. This corresponds to steps 170 to 190 of the method 100 and results in the finally determined root cause 6 being attributed with a confidence rating 12.

The human operator can access the GMLM 4 via a human-machine interface or predefined prompt patterns and therefore create a mechanism to check if other companies are already using a similar solution. Process plant assessments and recommendations can be displayed directly as an overlay on the process control system's control screens for the human operator in an industrial process plant who monitors the assigned process section or the entire plant from a (centralized) control room. Typically, these screens implement a process flowchart of the underlying industrial process and display relevant process variable values and time trends, such as the level of a tank or the temperature of a reactor. The operator will be able to access the GMLM 4 in a chat-based window that can be attached to any component seen in the system's control screens or separate screens. The process plant component can be color-coded to indicate that the GMLM 4 found a sub-optimal state. This can trigger a new chat-based interface with the operator. When drilling down, in a dedicated chat, the operator screens can provide additional information on the type of assessment, among other information.

Similar visualization can also be used in discrete manufacturing, where the responsible engineer, service personnel, etc. can be made aware of sub optimal states and alerts using existing human-machine interfaces (HMI) between production robots and human operators. Such HMIs include portable information devices such as tablets with specialized software and visualizations, on-site computer screens or centralized control rooms that provide an overview of all production robots. Here, assessments and recommendations can be incorporated that indicate for individual robots or multiple robots which sensor signals exhibit these sub optimal states and whether different robots are impacted by the same or similar sub optimal states.

### List of reference signs:

- 1: industrial plant
- 2: fault
- 2a: symptom of fault 2
- 2b: type of fault 2
- 2c: location of fault 2
- 3: query
- 4: generative machine learning model, GMLM
- 4a: output of GMLM 4
- 5: dynamic context information
- 6: root cause of fault 2
- 6a: reason why root cause 6 is most likely
- 6*: candidate root cause
- 7: salient information regarding which root cause is most likely
- 8: salient information regarding type 2b, location 2c of fault 2
- 9: static context information
- 10: verification plan
- 11: confidence metrics generated in verification plan
- 12: confidence rating for (candidate) root cause 6, 6*
- 13: remedial action
- 100: method for determining root cause 6 of fault 2
- 110: providing query 3
- 120: processing query 3
- 121: identifying information 8
- 122: obtaining information 8
- 122a: determining step-by-step sequence of actions
- 122b: executing step-by-step sequence of actions
- 130: providing data to GMLM 4
- 131: using static context information 9 as well
- 132: connectivity information as context information
- 133: using large information repository
- 140: identifying information 7
- 150: obtaining information 7
- 151: determining step-by-step sequence of actions
- 152: executing step-by-step sequence of actions
- 160: determining root cause 6 from output 4a
- 161: selecting one out of several candidate root causes 6*
- 161a: using GMLM 4 for selecting most likely root cause
- 162: determining reason 6a
- 163: identifying information 7
- 164: obtaining information 7
- 170: setting up verification plan 10
- 171: using verification plan 10 with verification questions
- 172: considering context information 5, 9 in verification plan 10
- 180: executing verification plan
- 181: asking verification questions
- 182: checking answers to verification questions
- 190: attributing confidence rating 12 to (candidate) root cause 6, 6*
- 200: determining remedial action 13
- 201: specific remedial actions 13
- 210: executing remedial action 13

- 11.1: operator or system problem description
- I1.2: preprocessed problem description
- 11.3: reasoning frameworks and static context
- 11.4: stated GMLM
- I1.5: external data
- 11.6: summarized dynamic real-time and historic data
- 11.7: stated GMLM with tool access
- 11.8: fault detection with root causes
- 11.9: validated fault detection with root causes
- O1.1: question processing
- O1.2: static context setup
- O1.3: dynamic information retrieval
- O1.4: external tool setup
- O1.5: answer extraction
- O1.6: validation loop

## Claims

1. A computer-implemented method (100) for determining the root cause (6) of a fault (2) in an industrial plant (1), comprising the steps of:
• providing (110) a query (3) as to the root cause of a suspected fault (2) of the industrial plant or one of its assets, and/or of symptoms (2a) in which this suspected fault (2) manifests itself;
• processing (120) the query (3), said processing comprising determining, from the query (3), at least a type (2b) of the suspected fault (2), and the suspected location (2c) of this fault (2) in the industrial plant (1);
• providing (130), to a generative machine learning model, GMLM (4), at least:
∘ the query (3),
∘ the determined type (2b) and suspected location (2c) of the fault (2), and
∘ dynamic context information (5) about the industrial plant (1), said dynamic context (5) including at least state variables and/or measurement values captured in the industrial plant (1) and/or a control system thereof,
thereby obtaining an output (4a) that is indicative of at least one candidate root cause (6*); and
• determining (160), from the output (4a) of the GMLM (4), the sought root cause (6).

2. The method (100) of claim 1, wherein the determining (160) of the sought root cause (6) comprises:
• determining (161), from multiple candidate root causes (6*) of which one or more outputs (4a) of the GMLM (4) are indicative, one most likely root cause as the sought root cause (6); and
• determining (162) a reason (6a) why this root cause (6) is deemed to be most likely.

3. The method (100) of claim 2, wherein the multiple candidate root causes (6*) are provided (161a) to the GMLM (4) to which the query (3) was provided, and/or to another GMLM (4).

4. The method (100) of any one of claims 2 to 3, wherein the determining (160) of the sought root cause (6) further comprises, and/or is preceded by:
• identifying (140, 163) at least one piece of information (7) whose knowledge is indicative of which of the multiple candidate root causes (6*) is the most likely root cause; and
• obtaining (150, 164) this piece of information (7) from an automated system or service, and/or from an operator of the plant.

5. The method (100) of any one of claims 1 to 4, wherein the processing (120) of the query (3) comprises:
• identifying (121) at least one piece of information (8) whose knowledge is indicative of the type (2b) and/or location (2c) of the fault (2); and
• obtaining (122) this piece of information (8).

6. The method (100) of claim 4 or 5, wherein the obtaining (150, 164, 122) of the at least one piece of information (7, 8) comprises:
• determining (151, 164a, 122a) a step-by-step sequence of actions for obtaining this piece of information (7, 8); and
• causing (152, 164b, 122b) this sequence of actions to be executed.

7. The method (100) of any one of claims 5 to 6, wherein the at least one piece of information (8) is obtained from an automated system or service, and/or from an operator of the plant (1).

8. The method (100) of any one of claims 1 to 8, wherein the type (2b) of fault comprises one or more of: a permanent fault, a sporadic fault, and a recurring fault.

9. The method (100) of any one of claims 1 to 8, wherein static context information (9) that is indicative at least of the structure and/or of the layout of the industrial plant (1), and/or of physical, chemical and/or biochemical information of educts from which an industrial processes executed on the industrial plant (1) starts, is provided (131) to the GMLM (4).

10. The method (100) of any one of claims 1 to 9, wherein the static context information (9), and/or the dynamic context information (5), comprises (132) connectivity for material, information and/or energy between the fault (2), and/or its location (2b), on the one hand, and at least one candidate root cause (6*) on the other hand.

11. The method (100) of any one of claims 1 to 10, wherein the dynamic context information (5) further comprises (133) a large information repository from which the GMLM (4) is to extract information that is pertinent to the query (3).

12. The method (100) of any one of claims 1 to 11, wherein at least one GMLM (4) is a foundation model.

13. The method (100) of any one of claims 1 to 12, further comprising:
• setting up (170), based at least in part on the static and/or dynamic context information (5), and one or both of the query (3) and at least one candidate root cause (6*), a verification plan (10) comprising one or more actions, wherein executing each action produces a confidence metric (11) that is indicative of a propensity of the candidate root cause (6*) being plausible;
• executing (180) the verification plan (10), thereby obtaining one or more confidence metrics (11); and
• attributing (190) a confidence rating (12) to the candidate root cause (6*), and/or to the finally determined root cause (6), based at least in part on these confidence metrics (11).

14. The method (100) of claim 13, wherein
• the verification plan (10) comprises (171) at least a set of verification questions and expected answers;
• executing the verification plan (10) comprises (181) at least providing verification questions to the used GMLM (4), and/or to a different GMLM (4); and
• the confidence metrics (11) comprise (182) at least a measure for an extent to which the so-obtained answers to the verification questions are in agreement with the expected answers.

15. The method (100) of any one of claims 13 to 14, wherein at least one action in the verification plan (10) comprises (172) evaluating to which extent:
• the GMLM (4) should be able to determine a root cause (6) given the static context information (9) and/or dynamic context information (5), and/or
• the candidate root cause (6*), and/or the finally determined root cause (6), is plausible given the static (9) and/or dynamic (5) context information.

16. The method (100) of any one of claims 1 to 15, further comprising:
• determining (200), based at least in part on the finally determined root cause (6), at least one remedial action (13) that comprises changing the physical state and/or behavior of the industrial plant (1) or at least one of its assets; and
• executing (210) the at least one remedial action (13) on the industrial plant (1) and/or the at least one asset.

17. The method (100) of claim 16, wherein the remedial action (13) comprises (201) one or more of:
• replacing and/or repairing at least one asset that is part of the finally determined root cause (6); and/or
• substituting a functionality, and/or a product, of at least one asset that is part of the finally determined root cause (6); and/or
• moving the industrial plant (1), and/or at least one of its assets, into a state where it can better tolerate the presence of the finally determined root cause (6).

18. A computer program, comprising machine-readable instructions that, when executed by one or more computers and/or compute instances, cause the one or more computers and/or compute instances to perform the method (100) of any one of claims 1 to 17.

19. A non-transitory machine-readable data carrier and/or a download product with the computer program of claim 18.

20. One or more computers and/or compute instances with the computer program of claim 18, and/or with the machine-readable data carrier and/or download product of claim 19.
